# EUROPÄISCHE PATENTSCHRIFT

(11) **EP 3 430 842 B1**
(45) Veröffentlichungstag und Bekanntmachung des Hinweises auf die Patenterteilung: **11.03.2020**
(21) Anmeldenummer: 17703679.5
(22) Anmeldetag: 27.01.2017
(51) Int. Cl.: H04W 52/02

(54) **VERFAHREN ZUM BETREIBEN EINER MOBILFUNKSTATION, SOWIE RELAISFUNKSTATION UND MOBILFUNKSTATION ZUR VERWENDUNG BEI DEM VERFAHREN**
METHOD FOR OPERATING A MOBILE RADIO STATION, AND RELAY RADIO STATION AND MOBILE RADIO STATION FOR USE IN THE METHOD
PROCÉDÉ POUR FAIRE FONCTIONNER UNE STATION RADIO MOBILE, STATION RADIO RELAIS ET STATION RADIO MOBILE DESTINÉES À ÊTRE UTILISÉES DANS LE CADRE DUDIT PROCÉDÉ

(30) Priorität: 16.03.2016 DE 102016204387; 01.07.2016 DE 102016212002
(43) Veröffentlichungstag der Anmeldung: 23.01.2019
(73) Patentinhaber: VOLKSWAGEN AKTIENGESELLSCHAFT, 38440 Wolfsburg (DE)
(72) Erfinder: ALIEIEV, Roman, 39576 Stendal (DE); KWOCZEK, Andreas, 38165 Lehre (DE); HEHN, Thorsten, 85055 Ingolstadt (DE)
(86) Internationale Anmeldenummer: PCT/EP2017/051790
(87) Internationale Veröffentlichungsnummer: WO 2017/157558

(56) Entgegenhaltungen:
- US-A1- 2008 045 145
- US-A1- 2011 305 294
- US-A1- 2013 064 173

## Beschreibung

Die Erfindung betrifft ein Verfahren zum Betreiben einer Mobilfunkstation, wobei die Kommunikation zwischen Basisstation und Mobilfunkstation über eine Relaisfunkstation geleitet wird. Der Vorschlag betrifft weiterhin eine Relaisfunkstation und eine Mobilfunkstation zur Verwendung bei dem Verfahren.

### Hintergrund der Erfindung

Grundlage der Erfindung ist zunächst einmal das Szenario von mit Funkkommunikationsmodulen ausgestatteten Fahrzeugen, die im öffentlichen Straßenverkehr direkt miteinander kommunizieren, sei es für ein kooperatives oder autonomes Fahren. Techniken für die Fahrzeug-zu-Fahrzeug Direktkommunikation wurden bereits entwickelt und werden weiterentwickelt. Als Beispiel werden erwähnt die FahrzeugDirektkommunikation über WLAN, hier insbesondere die Variante nach dem WLAN Standard IEEE 802.11p. Bei dieser Technik werden zur Kommunikation zwischen den Fahrzeugen ad hoc WLAN Netze aufgebaut (Kommunikation im Bereich der "Ad Hoc Domain").

Fahrzeugkommunikation ist aber auch im Bereich der Mobilfunknetze möglich. Bei dieser Technik muss allerdings die Basisstation die Nachrichten von Fahrzeug zu Fahrzeug vermitteln. Das ist der Bereich, wo die Kommunikation in der sogenannten "Infrastructure Domain" stattfindet. Für die kommende Mobilfunkgeneration wird auch die Fahrzeugdirektkommunikation ermöglicht. Bei LTE heißt diese Variante LTE-V, bei der 5G Initiative heißt diese Variante Device-to-Device (D2D).

Typische Kommunikations-Szenarien sind Sicherheitsszenarien, Verkehrseffizienzszenarien und Infotainment. Für den Bereich Sicherheit werden folgende Szenarien genannt: "Cooperative Forward Collision Warning", "Pre-Crash Sensing/Warning", "Hazardous Location Warning". In diesen Bereichen tauschen die Fahrzeuge untereinander Informationen wie Position, Richtung und Geschwindigkeit aus, auch Parameter wie Größe und Gewicht. Weitere Informationen die übertragen werden betreffen Absichtsinformationen, wie "Fahrzeug beabsichtigt zu überholen", "Fahrzeug biegt links/rechts" ab, usw. die für das kooperative Fahren interessant sind. Dabei werden oft Sensordaten übermittelt. Falls eine Gefahrensituation vorliegt und der Fahrer nicht reagiert, könnte das Auto automatisch abbremsen, so dass ein Unfall verhindert wird oder zumindest die Folgen bei dem unvermeidlichen Unfall möglichst gering gehalten werden. In dem Bereich des "Platooning", hierbei handelt es sich um den Bereich des Fahrens in einer Fahrzeugkolonne, ist es geplant z.B. Information über das geplante Bremsverhalten von vorne nach hinten weiterzumelden um Auffahrunfälle zu vermeiden.

Im Bereich Verkehrseffizienz werden genannt: "Enhanced Route Guidance and Navigation", "Green-Light Optimal Speed Advisory" und "V2V Merging Assistance".

Im Bereich Infotainment steht der Internet-Zugang im Vordergrund.

Derzeit sind folgende Mobilfunktechnologien für die Fahrzeug zu Fahrzeugkommunikation anwendbar: 3GPP-basiertes UMTS, HSPA, LTE, und die kommenden 5G Standards. Für die Fahrzeugdirektkommunikation wird erwähnt LTE-V und 5G D2D.

Die LTE Technologie ist in den letzten Jahren eines der wichtigsten Mobilfunk-Kommunikationssysteme geworden. Sie beherrscht verschiedene Szenarien und bietet eine mobile Datenverbindung sowohl für statische als auch für dynamische Umgebungen. Es existieren aber weiterhin Szenarien, mit denen LTE nicht zurechtkommt. Ein prominentes Beispiel aus dem automobilen Bereich ist das Parkhaus-Szenario, wo zu hohe Dämpfungen den Betrieb verhindern. Das Standardisierungsgremium versucht mit dem LTE-M Standard Szenarien mit hoher Dämpfung zu entgegnen. Diese sind aber eher für Kellerräume als Tiefgaragen ausgelegt.

Es besteht also die Situation, dass die Versorgung der Fahrzeuge mit Daten in Bereichen mit schlechter Netzabdeckung, insbesondere in Tiefgaragen, nicht gesichert ist. Zwar wäre es möglich in solchen Bereichen weitere stationäre Basisstationen, zu installieren, dies erfordert jedoch einen hohen Installations- und Wartungsaufwand und auch einen hohen finanziellen Aufwand für die Mobilfunkbetreiber. Selbst wenn das abgestellte Fahrzeug durch Erhöhen der Sendeleistung doch noch eine Verbindung zur Basisstation Aufbauen könnte, also ohne zusätzlich installierte Feststationen in der Tiefgarage, so besteht die Gefahr, dass die Fahrzeugbatterie zu sehr entladen wird. Dann kann entweder das Fahrzeug nicht mehr gestartet werden oder die Reichweite des Fahrzeugs im Fall von Elektromobilität verringert sich, was ebenfalls unerwünscht ist.

Erste Ansätze zur Verbesserung der Netzabdeckung wie auch zur Erhöhung der Bandbreite beruhen auf der Relaisfunktechnik und sind in der 4. Mobilfunkgeneration unter dem Stichwort 4G LTE Advanced Relay bekannt. Dabei ist es aber vorgesehen eine stationäre Relaisfunkstation zu installieren. Zwar sind die Kosten für die Relaisfunkstation deutlich geringer als bei einer Basisstation, im Sprachgebrauch von LTE eine evolved Node Base (eNodeB), jedoch bleibt noch Installations- und Wartungsaufwand.

Um Mobilfunkstationen besonders effizient zu betreiben gibt es weiterhin noch den Ansatz des Discontinuous Reception (DRX). Hier werden Mobilfunkstationen, im Sprachgebrauch von LTE ein User Equipment (UE), gezielt in Schlafzustände versetzt, in denen weniger Energie verbraucht wird. Regelmäßig werden die Geräte wieder aufgeweckt um die für sie vorgesehenen Daten empfangen zu können und ihnen Gelegenheit zu geben ihre Daten zu senden.

Eine Beschreibung des DRX Betriebsmodes findet sich in einem Thesis Report des Department of Electronic Systems, Radio Access Technology Section der Aalborg Universität vom Nov. 20, 2009 mit dem Titel "Discontinuous Reception And Transmission (Drx/Dtx) Strategies in Long Term Evolution (Lte) for Voice-Over-IP (VOIP) Traffic under both Full-Dynamic and Semi-Persistent Packet Scheduling Policies" von Dario Vinella und Michele Polignano.

Aus der US 2008/045145 A1 ist ein Kommunikationssystem bekannt bestehend aus einer Mobilfunkstation, einer Relaisstation und einer Basisstation. Die Kommunikation zwischen Mobilfunkstation und Basisstation kann über eine Relaisstation stattfinden. Dabei kann die Mobilfunkstation in einem Energiesparmodus betrieben werden, in dem sie in einen Schlafzustand versetzt wird. Die Mobilfunkstation übermittelt den Wechsel zum Energiesparmodus in einer Mobile Sleep Request-Nachricht.

Aus der US 2011/305294 A1 ist ein Kommunikationssystem mit Relaisstation bekannt, bei dem die verschiedenen drahtlos angebundenen Terminals in einem Energiesparmodus betrieben werden können. Es findet eine Synchronisation zwischen Relaisstation und Drahtlos-Terminal statt.

Aus der US 2013/064173 A1 ist ein Kommunikationssystem bekannt bestehend aus einer Mobilfunkstation, ein oder mehreren Relaisstationen und einer Basisstation. Die Kommunikation zwischen Mobilfunkstation und Basisstation kann über eine oder mehrere Relaisstationen stattfinden. Dabei kann die Mobilfunkstation in einem Energiesparmodus DRX betrieben werden, in dem sie zeitweilig in einen Schlafzustand versetzt wird, wobei die Relaisstation ebenfalls in einem Energiesparmodus betrieben wird, in dem sie zeitweilig in einen Schlafzustand versetzt wird. Dabei werden die Schlaf-/Wachzustände von Mobilstation und Relaisstation miteinander synchronisiert

Die Mobilfunkindustrie hat mit dem "Discovery Signal" eine Lösungen entwickelt um Geräte die sich Schlafzustand befinden aufzuwecken. Diese Lösung ist aber für das Tiefgaragenszenario nicht einsetzbar. Denn für die Discovery Signal Lösung wird stets davon ausgegangen, dass sich die Small Cell um das Relais herum und damit die dort angemeldeten UEs im Abdeckungsbereich einer Makrostation befinden. Bei dem Tiefgaragenszenario ist aber gerade dies nicht gewährleistet und es muss davon ausgegangen werden, dass sich die UEs nicht im Abdeckungsbereich der Makrozelle befinden.

### Erfindung

Eine Lösung für das Parkhaus-Szenario setzt auf dem Relaisfunk-Ansatz auf. Die Relaisfunk-Technologie ist bekannt.

Schlafzustände für das UE sind bereits bekannt, allerdings geht die Mobilfunkindustrie stets davon aus, dass die Basisstation permanent aktiv ist.

Effizienz ist ein zentrales Thema im Mobilfunk. Standardisierungsgremien wie die 3GPP stecken viel Aufwand in Stromsparmechanismen. Diese zielen jedoch meist auf das User Equipment und die damit verbundene Batterielaufzeit des Terminals. Die Grundidee hinter diesen Mechanismen ist, dass Mobilfunkzelle und UE einen Schlafzyklus und einen Aufwachzeitpunkt für das UE vereinbaren. Die Mobilfunkzelle bleibt aktiv und wird Informationen, die für diese Teilnehmerendstation UE relevant sind (z.B. eingehender Anruf) erst senden, wenn der Aufwachzeitpunkt des UEs erreicht ist.

Die Teilnehmerendstation UE wird in dieser Zeit weiterhin Synchronisierungsinformation von der Basisstation lesen, aber keine Paginginformation (also Daten, die den Aufbau einer Telefonverbindung betreffen). Dadurch kann das UE deutlich Strom sparen, aber bleibt weiterhin mobil. Bewegt es sich beispielsweise aus der Zelle heraus, merkt es dies beim Lesen der Synchronisierungsinformation und kann entsprechend aufwachen um Handover-Prozesse und Ähnliches anzustoßen.

Der neue Ansatz geht von dem DRX-Mode aus und überträgt dieses Konzept auf die Relaisfunktechnik. Es sollen die Relaisfunkstation und die darüber verbundenen Teilnehmerendstationen UEs möglichst effizient betrieben werden. Dies ist Aufgabe der Erfindung.

Diese Aufgabe wird durch ein Verfahren zum Betreiben einer Mobilfunkstation gemäß Anspruch 1, eine Relaisfunkstation gemäß Anspruch 5 und eine Mobilfunkstation gemäß Anspruch 6 gelöst.

Die abhängigen Ansprüche beinhalten vorteilhafte Weiterbildungen und Verbesserungen der Erfindung entsprechend der nachfolgenden Beschreibung dieser Maßnahmen.

Nach dem neuen Konzept wird neben "Discontinuous Reception" (DRX) auch ein Betriebsmodus "Discontinuous Synchronization" (DS) und ein Betriebsmodus "Discontinuous Access" (DA) eingeführt. Damit wird auch ein diskontinuierlicher Übertragungsmodus bei einer Relaisfunkstation eingeführt. Dies entspricht einer Erweiterung des bestehenden Mobilfunkstandards LTE insbesondere für die 5. Generation 5G.

Das hier vorgestellte Konzept wird dann wichtig, wenn das Fahrzeug und sein Mobilkommunikationsequipment als Relais / Mobile Basisstation (Small Cell) dienen sollen. Denn dann ist die Relaisfunkstation im Fahrzeug eingebaut und wenn das Fahrzeug abgestellt ist, würde die Fahrzeugbatterie belastet während des Betriebes des Relais.

Zur Lösung bei dem Tiefgaragenszenario wird deshalb ein Kommunikationsprotokoll für den Kontrollkanal vorgeschlagen, welches sich wie folgt zusammenfassen lässt:
- Senden der Konfigurationsinformation "Discontinuous Reception and Access" (DRxA): Das Relais teilt allen angemeldeten UEs mit, wie lange diese nicht mit Paging-Informationen im Downlink versorgt werden und keinen Zugriff auf den Uplink (Random Access Channel) haben. Diese Betriebsart entspricht einer kombinierten Betriebsart DRX und DA.
- Bestätigung des Empfangs der Konfigurationsinformationen DRxA: die UEs teilen dem Relais mit, dass sie die Konfiguration erhalten haben und befolgen werden.

Optional kann ein UE auch eine Nichtbestätigung schicken (NACK) und um einen anderen Takt bitten.
- Senden der Konfigurationsinformation "Discontinuous Synchronization" (DS): das Relais teilt den UEs mit, in welchem Takt Synchronisierungsinformationen vom Relais gesendet werden.
- Bestätigung des Empfangs der Konfigurationsinforma-tionen DS: die UEs teilen dem Relais mit, dass sie die Konfiguration erhalten haben und befolgen werden. Optional kann ein UE auch eine Nichtbestätigung schicken (NACK) und um einen anderen Takt bitten.

Basierend auf diesem Protokoll müssen sich Basisstation und UE nun an folgende Aufwachreihenfolge halten:
- Zum Discontinuous Sync wachen sowohl Relais als auch UE gemeinsam auf.
- Zum Discontinuous Reception and Access wachen Relais als auch UE gemeinsam auf. Das Relais sendet dabei "Common Reference Symbols" als auch, wenn anstehend, Daten für die angemeldeten UEs aus. Das Relais lauscht auch auf Mitteilungen über den "Random Access Channel" um eingehende Verbindungen von UEs mitzubekommen.

Die UEs wachen an dieser Stelle auf, aber müssen ggf. nur einen Teil ihrer Funktionalität nutzen:
∘ Alle UEs müssen auf eingehende Verbindungen lauschen.
∘ Nur UEs die Daten zu senden haben nutzen den Random Access Channel für ihre Uplink-Übertragungen.

Für die Einrichtung des Energiesparmodus bei der Relaisfunkstation, ist es vorteilhaft, dass sie mit Kommunikationsmitteln ausgestattet ist, die vor Einleitung des Energiesparmodus eine erste Kontrollnachricht zu der Mobilfunkstation (UE) senden, in der der Mobilfunkstation (UE) mitgeteilt wird wie der Schlaf-/Wachzyklus der Relaisfunkstation (RN) während des Energiesparmodus bzgl. der Downlink-Übertragungsrichtung aus Sicht der Mobilfunkstation ist. So können die Schlaf-/Wachzyklen von Relaisfunkstation und Teilnehmerendstation einfach synchronisiert werden.

Diesem Zweck dienen auch die weiteren Maßnahmen eine zweite Kontrollnachricht zu der Mobilfunkstation zu senden, in der der Mobilfunkstation mitgeteilt wird wie der Schlaf-/Wachzyklus der Relaisfunkstation während des Energiesparmodus bzgl. der Uplink-Übertragungsrichtung aus Sicht der Mobilfunkstation ist und eine dritte Kontrollnachricht zu der Mobilfunkstation zu senden, in der der Mobilfunkstation mitgeteilt wird wie der Schlaf-/Wachzyklus der Relaisfunkstation während des Energiesparmodus bzgl. der Aussendung von Synchronisationsinformationen zu der Mobilfunkstation ist.

In vorteilhafter Weise können die erste und zweite Kontrollnachricht zu einer kombinierten Kontrollnachricht zusammengefasst sein, wenn in einem Betriebsmode die gleichzeitige Übertragung von Daten in Uplink- und Downlinkrichtung möglich ist (Vollduplexbetrieb).

Für eine erfindungsgemäße Mobilfunkstation sind die entsprechenden Maßnahmen vorteilhaft. Sehr vorteilhaft ist, dass die Mobilfunkstation Kommunikationsmittel aufweist, die nach Empfang einer ersten, zweiten oder dritten Kontrollnachricht, in der der Mobilfunkstation von einer Relaisfunkstation mitgeteilt wird wie der Schlaf-/Wachzyklus der Relaisfunkstation während des Energiesparmodus bezüglich der Downlink-Übertragungsrichtung, der Uplink-Übertragungsrichtung aus Sicht der Mobilfunkstation oder bzgl. der Aussendung von Synchronisationsinformationen ist, vor Einleitung des Energiesparmodus eine Bestätigungsnachricht zu der Relaisfunkstation zurücksenden in der der Empfang und die Akzeptanz des in der ersten, zweiten oder dritten Kontrollnachricht mitgeteilten Schlaf-/Wachzyklus bestätigt wird. Dies dient auch der Synchronisierung der Schlaf-/Wachzustände von Relaisfunkstation und Mobilfunkstation.

Um den Anforderungen von laufenden Vorgängen, in der Mobilfunkstation gerecht zu werden, ist es vorteilhaft, wenn die Kommunikationsmittel statt der Bestätigungsnachricht eine negative Bestätigungsnachricht zu der Relaisfunkstation zurücksenden, mit der der Relaisfunkstation die Nichtakzeptanz des in der ersten, zweiten oder dritten Kontrollnachricht mitgeteilten Schlaf-/Wachzyklus mitgeteilt wird.

Dazu ist es für einen effizienten Betrieb dann noch von Vorteil, wenn die Kommunikationsmittel in der negativen Bestätigungsnachricht einen Gegenvorschlag zur Vereinbarung eines modifizierten Schlaf-/Wachzyklus zu der Relaisfunkstation senden. So kann dann ein abweichender, besser geeigneter Schlaf-/Wachrhythmus vereinbart werden.

### Zeichnungen

Ein Ausführungsbeispiel der Erfindung ist in den Zeichnungen dargestellt und wird nachfolgend anhand der Figuren näher erläutert.

Es zeigen:
- Fig. 1: die Problematik in dem Mobilfunk bei dem Tiefgaragenszenario;
- Fig. 2: ein Blockdiagramm für die Fahrzeugelektronik eines Kraftfahrzeuges;
- Fig. 3: den Schlaf-/Wachzyklus bei den Betriebsmodi DRxA und DS;
- Fig. 4: das Kommunikationsprotokoll für den Kontrollkanal mit dem die Relaisfunkstation den Wechsel zu den Betriebsmodi DRxA und DS einleitet; und
- Fig. 5: die Formate der Kontrollnachrichten mit denen die Betriebsmodi DRxA und DS eingeleitet werden, sowie die Formate der zugehörigen Kontrollnachrichten, mit denen die Einleitung des Betriebsmodus von den sie betreffenden Endgeräten bestätigt werden.

Detaillierte Beschreibung der Ausführungsbeispiele der Erfindung

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

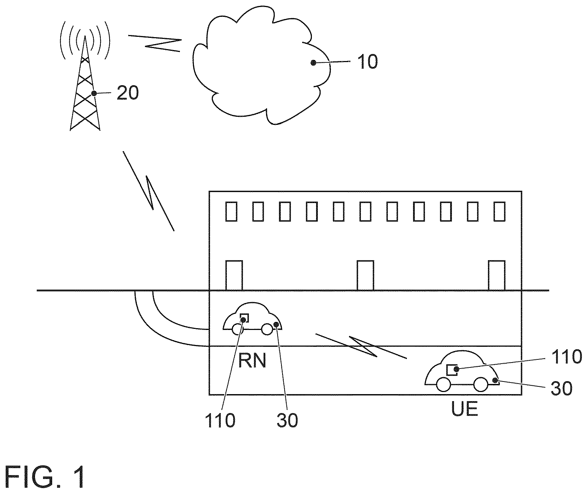

Fig. 1 zeigt die Problematik des Tiefgaragenszenarios bei der Mobilkommunikation. Es sind zwei Fahrzeuge gezeigt, die mit der Bezugszahl 30 versehen sind. Die Fahrzeuge sind jeweils mit einer On-Board Unit 110 ausgestattet, die als Sende- und Empfangseinheit für die Mobilkommunikation dient. Alle Nachrichten von den Fahrzeugen (Uplink) und zu den Fahrzeugen (Downlink) werden entweder über eine Basisstation 20 geleitet, die eine Mobilfunkzelle bedient oder im Fall von Fahrzeugdirektkommunikation (Sidelink) unmittelbar zwischen den Fahrzeugen 30 ausgetauscht. Befinden sich die Fahrzeuge innerhalb dieser Mobilfunkzelle, sind sie bei der Basisstation 20 angemeldet bzw. eingebucht. Verlassen sie die Mobilfunkzelle, werden sie an die benachbarte Zelle übergeben (Handover) und dementsprechend an der Basisstation 20 abgemeldet bzw. ausgebucht. Die Basisstation 20 stellt auch einen Zugang zum Internet 10 zur Verfügung, so dass die Fahrzeuge 30 bzw. alle anderen Mobilfunk-Teilnehmer in der Mobilfunkzelle mit Internetdaten versorgt sind.

Diese Techniken sind standardisiert und es wird diesbezüglich auf die entsprechenden Spezifikationen von Mobilfunkstandards hingewiesen. Als ein modernes Beispiel eines Mobilfunkstandards wird auf die 3GPP Initiative und den LTE-Standard (Long Term Evolution) Bezug genommen. Viele der zugehörigen ETSI Spezifikationen liegen z.Z. in der Version 13 vor. Als Beispiel wird genannt: ETSI TS 136 213 V13.0.0 (2016-05); Evolved Universal Terrestrial Radio Access (E-UTRA); Physical layer procedures (3GPP TS 36.213 version 13.0.0 Release 13).

Das Problematische an dem bei der Erfindung betrachteten Tiefgaragenszenario ist nun, dass die Netzabdeckung in einer Tiefgarage oft nicht gegeben ist. Die Funkwellen durchdringen bekanntlich Betonwände nur schlecht, so dass ein Mobilfunkteilnehmer, der sich im hinteren Teil oder unteren Teil einer Tiefgarage aufhält, kein Mobilfunksignal empfangen kann. Fig. 1 zeigt nun ein Fahrzeug 30 das im unteren Teil der Tiefgarage geparkt ist. Die On-Board Unit 110 dieses Fahrzeuges ist als User Equipment UE konfiguriert. Dieses Fahrzeug hat keine Verbindung zur Basisstation 20 wegen der schlechten Netzabdeckung im hinteren/unteren Teil der Tiefgarage.

Im vorderen Bereich der Tiefgarage, Nähe der Ausfahrt oder Einfahrt oder auch in der Nähe von Licht- oder Versorgungsschächten ist die Netzabdeckung oft besser. Dort ist ebenfalls ein Fahrzeug 30 abgestellt. Die On-Board Unit 110 dieses Fahrzeuges ist als Relaisfunkstation (Relay Node) RN konfiguriert. Damit dient dieses Fahrzeug 30 dazu die Mobilfunkversorgung im hinteren/unteren Teil der Tiefgarage sicherzustellen. Einerseits hält die Relaisfunkstation die Funkverbindung zur Basisstation 20 aufrecht. Andererseits sind die anderen Fahrzeuge im hinteren/unteren Teil der Tiefgarage bei der Relaisfunkstation RN angemeldet. Für diese leitet die Relaisfunkstation deren Nachrichten an die Basisstation 20 weiter. Umgekehrt werden in Downlink-Übertragungsrichtung die Nachrichten, die von der Basisstation 20 zu den Teilnehmern UE gesendet werden, von der Relaisfunkstation RN empfangen und an die Teilnehmer UE weitergeleitet. So können auch diejenigen Fahrzeuge mit Mobilkommunikation versorgt werden, die keine direkte Funkverbindung zu der Basisstation 20 aufbauen können.

Die Auswahl, welches Fahrzeug als Relaisfunkstation RN konfiguriert wird, geschieht nach bestimmten Kriterien. Dieses Fahrzeug sollte noch Verbindung zur Basisstation 20 haben und eben gleichzeitig in der Tiefgarage stehen. Dafür kann z.B. vom Fahrzeugnavigationssystem die Information stammen, dass sich das Fahrzeug in der Tiefgarage aufhält. Sollte das Fahrzeug die Tiefgarage verlassen, wird ein anderes Fahrzeug als Relaisfunkstation konfiguriert. Auch kann die Funktion als Relaisfunkstation zu arbeiten zeitbeschränkt sein um die Belastung der Batterie dieses Fahrzeugs gering zu halten.

Der Einsatz einer Relaisfunkstation RN ist im bestehenden LTE Standard spezifiziert. Im Hinblick auf die Offenbarung der Erfindung wird ausdrücklich auf die Spezifikation ETSI TS 136 216 V13.0.0 (2016-01); Universal Mobile Telecommunications System (UMTS); LTE; Evolved Universal Terrestrial Radio Access (E-UTRA); Physical layer for relaying operation (3GPP TS 36.216 version 13.0.0 Release 13) Bezug genommen.

Erfindungsgemäß wird die Relaisfunkstation nicht durchgängig betrieben sondern sporadisch, d.h. es wird ein Schlaf-/Wachzyklus für das Relais RN definiert. Wenn das Relais im Wachzustand ist, werden die Daten von den angemeldeten Teilnehmern in Uplink-Richtung zu der Basisstation übertragen. Es werden ebenfalls die Nachrichten von der Basisstation zu den Teilnehmern in Downlink-Richtung übertragen. Viele Funktionen einer LTE Basisstation eNodeB erfüllt auch die Relaisfunkstation RN. Das ist wegen des hohen Stromverbrauchs dann problematisch, wenn die Relaisstation wie hier betrachtet im abgestellten Fahrzeug untergebracht ist. Durch den sporadischen Betrieb mit Schlaf-/Wachzyklus kann dieses Problem gelöst werden.

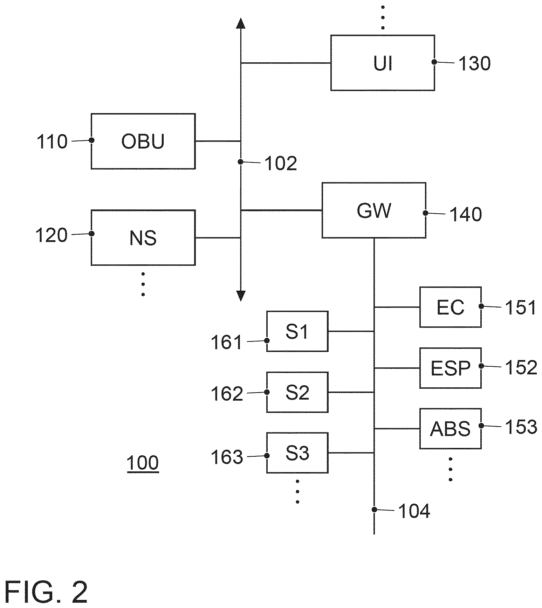

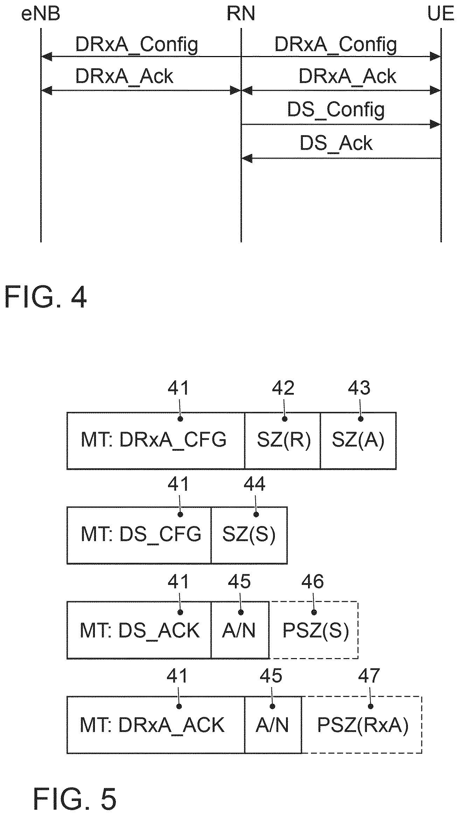

Fig. 2 zeigt den typischen Aufbau einer Kfz-Elektronik eines modernen Kraftfahrzeuges. Mit der Bezugszahl 151 ist ein Motorsteuergerät bezeichnet. Die Bezugszahl 152 entspricht einem ESP-Steuergerät und die Bezugszahl 153 bezeichnet ein ABS-Steuergerät. Weitere Steuergeräte wie Getriebesteuergerät, Airbagsteuergerät usw. können im Kraftfahrzeug vorhanden sein. Die Vernetzung solcher Steuergeräte geschieht typischerweise mit dem CAN-Bussystem (Controller Area Network) 104 welches als ISO Norm standardisiert ist, ISO 11898. Da die verschiedensten Sensoren im Kraftfahrzeug installiert werden und diese nicht mehr nur an einzelne Steuergeräte angeschlossen werden, werden solche Sensordaten ebenfalls über das Bussystem 104 zu den einzelnen Steuergeräten übertragen. Beispiele von Sensoren im Kraftfahrzeug sind Raddrehzahlsensoren, Lenkwinkelsensoren, Beschleunigungssensoren, Drehratensensoren, Reifendrucksensoren, Abstandssensoren usw. Die verschiedenen Sensoren mit dem das Fahrzeug ausgestattet ist, sind in der Figur 5 mit der Bezugszahl 161, 162, 163 bezeichnet.

Das moderne Kraftfahrzeug kann aber noch weitere Komponenten aufweisen wie Videokameras, z.B. als Rückfahrkamera oder als Fahrerüberwachungskamera als auch ein Radargerät für die Realisierung eines Radartempomaten oder zur Realisierung eines Abstandswarnungs- oder Kollisionswarnungsgerätes.

Im Kraftfahrzeug befinden sich dann auch noch weitere elektronische Vorrichtungen. Diese sind mehr im Bereich der Fahrgastzelle angeordnet und werden oft auch von dem Fahrer bedient. Beispiele sind eine Benutzerschnittstellenvor-richtung mit dem der Fahrer Fahrmodi und anwählen kann, aber auch klassische Komponenten bedienen kann. Darunter fallen Gangwahl sowie auch Blinker-Steuerung, Scheibenwischersteu-erung, Lichtsteuerung, usw. Diese Benutzerschnittstellenan-ordnung ist mit der Bezugszahl 130 versehen. Die Benutzerschnittstellenanordnung 130 ist oft auch mit einem Dreh/Druckschalter ausgestattet, über den der Fahrer die verschiedenen Menüs anwählen kann die auf einem Display im Cockpit angezeigt werden. Andererseits fällt auch ein berührungsempfindliches Display in diese Kategorie. Selbst die Spracheingabe für die Bedienungsunterstützung fällt in diesen Bereich.

Davon unterschieden wird oft ein Navigationssystem 120, welches ebenfalls im Bereich des Cockpits verbaut wird. Die Route, welche auf einer Karte angezeigt wird, kann natürlich ebenfalls auf dem Display im Cockpit dargestellt werden. Weitere Komponenten, wie eine Freisprecheinrichtung können vorhanden sein, sind aber nicht näher dargestellt. Die Bezugszahl 110 bezeichnet noch eine On-Board Unit. Diese On-Bord Unit 110 entspricht einem Kommunikationsmodul über das das Fahrzeug mobile Daten empfangen und senden kann. Typischerweise handelt es sich hier um ein Mobilfunk-Kommunikationsmodul, z. B. nach dem LTE-Standard.

Die Geräte des Fahrgastraumes sind ebenfalls untereinander vernetzt über ein Bussystem, das mit der Bezugszahl 102 bezeichnet wird. Es kann sich z. B. um das Highspeed CAN-Bussystem nach ISO 11898-2 Standard handeln, hier allerdings in der Variante für Datenübertragung mit höherer Datenrate zwischen Infotainment-Geräten. Zu dem Zweck, das fahrzeugrelevante Sensordaten über die Kommunikationsschnittstelle 110 zu einem anderen Fahrzeug oder zu einem Zentralrechner übertragen werden sollen, ist das Gateway 140 vorgesehen. Dieses ist mit beiden verschiedenen Bussystemen 102 und 104 verbunden. Das Gateway ist dazu ausgelegt die Daten, die es über den CAN-Bus 104 empfängt so umzusetzen, dass sie in das Übertragungsformat des Highspeed-CAN-Busses 102 umgesetzt werden, so dass sie in den dort spezifizierten Paketen verteilt werden können. Für die Weiterleitung dieser Daten nach extern, also zu einem anderen Kraftfahrzeug oder zu einem Zentralrechner ist die On-Board-Unit 110 mit der Kommunikationsschnittstelle 110 dazu ausgerüstet, diese Datenpakete zu empfangen und wiederum in das Übertragungsformat des entsprechend eingesetzten Mobilfunkstandards umzusetzen.

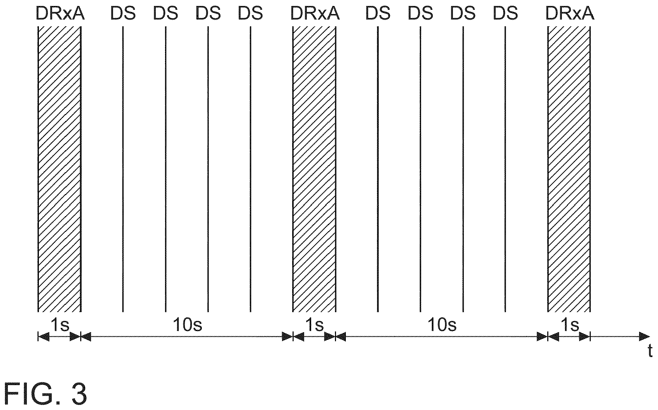

Fig. 3 zeigt ein Beispiel eines Schlaf-Wachzyklusses für eine Relaisfunkstation RN. Am Anfang von Fig. 3 wird das Relais im Betriebsmodus DRxA betrieben. Dies ist eine erste Wachphase, die im Beispiel für eine Sekunde andauert. Es folgt eine Schlafphase von 10 s Dauer, die durch kurze Wachphasen, in denen das Relais im Betriebsmodus DS betrieben wird, unterbrochen wird. Gezeigt sind 4 aufeinanderfolgende Wachphasen im Betriebsmodus DS, die also jeweils im Abstand von 2 s aufeinander folgen. Die Dauer des Betriebes im DS Modus beträgt nur wenige ms, als Beispiel wird 10 ms genannt. Fig. 3 zeigt noch einen zweiten Zyklus und den Anfang des dritten Zyklusses.

Im Betriebsmodus DRxA findet sowohl der Datenverkehr in Uplink-Übertragungsrichtung wie auch in Downlink-Übertragungsrichtung statt. Für die Downlink-Übertragungsrichtung wird der physikalische Kanal Physical Downlink Shared CHannel PDSCH von LTE benutzt. Für die Datenübertragungen in Uplink-Übertragungsrichtung wird der physikalische Kanal Physical Uplink Shared CHannel PUSCH von LTE benutzt.

Die Konfiguration der Relaisfunkstation und der Teilnehmer-Endstation geschieht allerdings mit Hilfe von Kontrollnachrichten. Diese Kontrollnachrichten werden über entsprechende Kontrollkanäle übertragen. Für die Downlink-Übertragungsrichtung wird der physikalische Kontrollkanal Relay Physical Downlink Control CHannel R-PDCCH von LTE benutzt. Für die Uplink-Übertragungsrichtung wird der physikalische Kontrollkanal Physical Uplink Control CHannel PUCCH von LTE benutzt.

Welche Kontrollnachrichten zur Konfiguration von Relaisfunkstation RN und Teilnehmer-Endstation UE über die Kontrollkanäle ausgetauscht werden, zeigt die Fig. 4. Gezeigt ist, dass das Relais RN zunächst eine DRxA_Config Kontrollnachricht über den Kontrollkanal R-PDCCH zur Teilnehmer-Endstation UE sendet. Damit wird die Teilnehmer-Endstation UE in Kenntnis gesetzt, dass die Relaisfunkstation RN es beabsichtigt in den Schlafzustand zu wechseln. In der Kontrollnachricht wird auch angegeben, wie lange der angekündigte Schlafzustand andauern wird, also für das in Fig. 3 gezeigte Beispiel 10s. Die Endstation bestätigt den Eingang der Kontrollnachricht DRxA_Config, indem sie selbst über den Uplink-Kontrollkanal PUCCH die Kontrollnachricht DRxA_Ack zurück zur Relaisfunkstation sendet. Beide Geräte Relaisfunkstation RN und Teilnehmer-Endstation UE wechseln danach in den Schlafzustand. Dabei wird ein Timer gestartet, der auf den in der Kontrollnachricht DRxA-Config mitgeteilten Wert programmiert wird. Der Timer zählt dann rückwärts und weckt die Station nach Ablauf des Timers wieder auf. Dieser Timer kann in einem Ausführungsbeispiel durch Software realisiert werden, die von einem Prozessor in der Station abgearbeitet wird. Alternativ, kann der Timer durch Hardware realisiert werden. In dem in Fig. 3 gezeigten Beispiel beträgt die Schlafphase für den DRxA Betriebsmodus 10s. Nach Ablauf von 10s werden Relaisfunkstation und Teilnehmer-Endstation UE wieder aufgeweckt. Sie bleiben dann in dem Beispiel von Fig. 3 für die Dauer von 1s aktiv um Datenübertragungen durchzuführen. In dieser Phase wird die Relaisfunkstation RN auch die für die Kanalschätzung erforderlichen "Common Reference Symbols" ausstrahlen. Diese werden über den LTE Kanal PDSCH an bestimmten Positionen von Ressourcenblöcke im Übertragungsrahmen übertragen. Anschließend würde erneut eine Kontrollnachricht DRxA-Config von der Relaisfunkstation RN zur Teilnehmer-Endstation UE versandt werden um die nächste Schlafphase einzuleiten. Diese Lösung ist sehr flexibel weil jede Schlafphase neu eingeleitet wird, so dass die Dauer der Schlafphase jeweils frei programmierbar ist.

Ebenso ist in der Fig. 4 dargestellt, dass die Relaisfunkstation RN eine Kontrollnachricht DS_Config zu der Teilnehmerendstation UE sendet. Im Beispiel wird diese Kontrollnachricht noch im Wachzustand zu der Teilnehmerendstation UE gesendet, ebenfalls über den Kontrollkanal R-PDCCH. In der Kontrollnachricht DS_Config wird auch angegeben, wie lange der angekündigte Schlafzustand in Bezug auf den DS Betriebsmode andauern wird, also für das in Fig. 4 gezeigte Beispiel 2s. Die Relaisfunkstation RN wartet dann noch den Eingang der Kontrollnachricht DS_Ack ab, den die Teilnehmerendstation UE zurücksendet. Wenn das erfolgt ist, wird wiederum ein Timer gestartet, der auf den in der Kontrollnachricht DS_Config mitgeteilten Wert programmiert wird. Der Timer zählt dann rückwärts und weckt die Station nach Ablauf des Timers wieder auf. Im Wachzustand des Betriebsmodes DS sendet das Relais Synchronisationsinformationen. Im LTE Standard ist festgelegt welche Synchronisationsinformationen die Basisstation aussenden soll. Diese Synchronisierungsinformationen werden ebenfalls von der Relaisfunkstation RN gesendet und zwar mit Hilfe der im Standard vorgesehenen Broadcast-Übertragungsart. Dafür kann der Downlink-Kanal R-PDCCH benutzt werden.

Die Kommunikation zwischen eNB und Relaisfunkstation RN kann über eine proprietäre Tunnellösung erfolgen oder so wie üblich zwischen Basisstation eNB und Teilnehmerendstation UE. Die Relaisfunkstation RN wird Nachrichten, die an die bei ihr angemeldeten Teilnehmerendstationen UE gerichtet sind empfangen und dann an die Teilnehmerendstationen UE weiterleiten. Alternativ kann die Relaisfunkstation RN auch eine Kontrollnachricht DRxA_Config zur Basisstation eNodeB senden, so dass dann die Basisstation ebenfalls mit dem Schlaf-/Wachzyklus der Relaisstation RN synchronisiert wird.

Fig. 5 zeigt noch das Format der Kontrollnachrichten DRxA_Config, DRxA_ACK, DS_Config und DS_ACK. Jede Nachricht beginnt mit einem Kopfteil 41 in dem der Nachrichtentyp bezeichnet ist. Bei der Kontrollnachricht DRxA_Config folgt ein Datenfeld 42 in dem die Schlafzeit SZ(R) bis zum nächsten Aufwachen mit der Möglichkeit hinsichtlich des Empfangs von Daten über den Downlink eingetragen wird. Danach folgt noch ein Datenfeld 43 in dem die Schlafzeit SZ(A) bis zum nächsten Aufwachen mit der Möglichkeit hinsichtlich des Sendens von Daten in Uplink-Übertragungsrichtung eingetragen wird. Beide Werte sind gleich groß, da Senden und Empfangen von Daten im Vollduplex-Mode bei LTE gleichzeitig möglich ist und die beiden Zustände DRX und DA kombiniert wurden zu dem DRxA Betriebsmodus. Im Beispiel von Fig. 3 beträgt der Wert 10s. Das Format der Kontrollnachricht DS-Config zur Konfiguration des Betriebsmodus DS ist in Fig. 5 an zweiter Stelle gezeigt. Im Kopfteil 41 ist der Eintrag für diese Nachrichtentyp gezeigt. In dem Datenfeld 44 wird die Schlafzeit SZ(S) eingetragen. Im Beispiel von Fig. 3 beträgt der Wert 2s. Darunter sind in Fig. 5 noch die Formate der Kontrollnachrichten DRxA_ACK und DS_ACK gezeigt. Im Kopfteil 41 findet sich wieder der Eintrag für den Nachrichtentyp. Im folgenden Datenfeld 45 wird eingetragen ob die Konfiguration wie angefordert vorgenommen wird oder nicht. Dafür reicht praktisch ein 1-Bitfeld in das ein ACK- oder NACK-Bit Platz hat. Wurde eine negative Bestätigung NACK eingetragen, so folgt noch ein weiteres Datenfeld 46 bzw. 47 in das eine vorgeschlagene abweichende Schlafzeit PSZ(RxA) bzw. PSZ(S) eingetragen wird. Damit kann also das Endgerät z.B. eine kürzere Schlafzeit anfordern etwa um einen im Gerät laufenden Datendienst besser zu versorgen. Als Beispiel wird ein laufendes Software-Update oder ein Karten-Update für das Navigationssystem genannt.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

Die Offenbarung ist nicht auf die hier beschriebenen Ausführungsbeispiele beschränkt. Es gibt Raum für verschiedene Anpassungen und Modifikationen im Rahmen der angehängten Ansprüche, die der Fachmann aufgrund seines Fachwissens als auch zum Schutzumfang der angehängten Ansprüche zugehörend in Betracht ziehen würde.

### Bezugszeichenliste

- 10: Internet
- 20: Basisstation
- 30: Fahrzeug
- 41: Kopfteil mit Nachrichtentyp
- 42: 1. Datenfeld für Schlafzeit
- 43: 2. Datenfeld für Schlafzeit
- 44: 3. Datenfeld für Schlafzeit
- 45: 4. Datenfeld für Bestätigung
- 46: 5. Datenfeld für vorgeschlagene Schlafzeit
- 47: 6. Datenfeld für vorgeschlagene Schlafzeit
- 100: Blockdiagramm Fahrzeug-Elektronik
- 102: Highspeed CAN-Bus
- 104: CAN-Bus
- 110: On-Board Unit
- 120: Navigationssystem
- 130: Benutzerschnittstellenanordnung
- 140: Gateway
- 151: Motor-Steuergerät
- 152: ESP-Steuergerät
- 153: ABS-Steuergerät
- 161: Sensor 1
- 162: Sensor 2
- 163: Sensor 3

## Patentansprüche

1. Verfahren zum Betreiben einer Mobilfunkstation (UE), wobei die Kommunikation zwischen Basisstation (20) und Mobilfunkstation (UE) über eine Relaisfunkstation (RN) geleitet wird, wobei die Mobilfunkstation (UE) in einem Energiesparmodus betrieben wird, in dem sie zeitweilig in einen Schlafzustand versetzt wird, wobei die Relaisfunkstation (RN) ebenfalls in einem Energiesparmodus betrieben wird, in dem sie zeitweilig in einen Schlafzustand versetzt wird, wobei die Schlaf-/Wachzustände von Mobilfunkstation (UE) und Relaisfunkstation (RN) synchronisiert werden, wobei von der Relaisfunkstation (RN) eine erste, zweite oder dritte Kontrollnachricht zur Mobilfunkstation (UE) gesendet wird, wobei in der ersten Kontrollnachricht der Mobilfunkstation (UE) mitgeteilt wird, wie der Schlaf-/Wachzyklus der Relaisfunkstation (RN) bzgl. der Downlink-Übertragungsrichtung aus Sicht der Mobilfunkstation (UE) ist, wobei in der zweiten Kontrollnachricht der Mobilfunkstation (UE) mitgeteilt wird, wie der Schlaf-/Wachzyklus der Relaisfunkstation (RN) bzgl. der Uplink-Übertragungsrichtung aus Sicht der Mobilfunkstation (UE) ist und wobei in der dritten Kontrollnachricht (DS_Config) der Mobilfunkstation (UE) mitgeteilt wird, wie der Schlaf-/Wachzyklus der Relaisfunkstation (RN) bezüglich der Aussendung von Synchronisationsinformationen zu der Mobilfunkstation (UE) ist, wobei die Mobilfunkstation (UE) eine Bestätigungsnachricht zu der Relaisfunkstation (RN) zurücksendet, in der der Empfang und die Akzeptanz des in der ersten, zweiten oder dritten Kontrollnachricht mitgeteilten Schlaf-/Wachzyklus bestätigt wird, **dadurch gekennzeichnet, dass** statt der Bestätigungsnachricht eine negative Bestätigungsnachricht zu der Relaisfunkstation (RN) zurückgesendet wird, mit der der Relaisfunkstation (RN) die Nichtakzeptanz des in der ersten, zweiten oder dritten Kontrollnachricht mitgeteilten Schlaf-/Wachzyklus mitgeteilt wird, wobei in der negativen Bestätigungsnachricht ein Gegenvorschlag zur Vereinbarung eines modifizierten Schlaf-/Wachzyklus enthalten ist, und wobei die Relaisfunkstation (RN) in einem Kraftfahrzeug (30) betrieben wird.

2. Verfahren nach Anspruch 1, wobei die zweite Kontrollnachricht mit der ersten Kontrollnachricht kombiniert wird und in einer gemeinsamen Kontrollnachricht (DRxA_Config) gesendet wird.

3. Verfahren nach Anspruch 1 oder 2, wobei die Bestätigung zu der ersten und zweiten Kontrollnachricht in einer gemeinsamen Bestätigungsnachricht (DRxA_Ack) gesendet wird.

4. Verfahren nach einem der vorhergehenden Ansprüche, wobei zur Übertragung der Daten das Mobilfunkkommunikationssystem nach dem LTE Standard (Long Term Evolution) eingesetzt wird.

5. Relaisfunkstation zur Verwendung bei dem Verfahren nach einem der vorhergehenden Ansprüche, wobei die Relaisfunkstation (RN) einen Energiesparmodus aufweist, in dem sie zeitweilig in einen Schlafzustand versetzt wird und bei dem die Schlaf-/Wachzustände der Relaisfunkstation (RN) mit einer Mobilfunkstation (UE) synchronisiert werden, wobei die Relaisfunkstation (RN) Kommunikationsmittel aufweist, die ausgebildet sind vor Einleitung des Energiesparmodus eine erste, zweite oder dritte Kontrollnachricht zu der Mobilfunkstation (UE) zu senden, wobei in der ersten Kontrollnachricht der Mobilfunkstation (UE) mitgeteilt wird, wie der Schlaf-/Wachzyklus der Relaisfunkstation (RN) während des Energiesparmodus bzgl. der Downlink-Übertragungsrichtung aus Sicht der Mobilfunkstation (UE) ist, wobei in der zweiten Kontrollnachricht der Mobilfunkstation (UE) mitgeteilt wird, wie der Schlaf-/Wachzyklus der Relaisfunkstation (RN) während des Energiesparmodus bzgl. der Uplink-Übertragungsrichtung aus Sicht der Mobilfunkstation (UE) ist und wobei in der dritten Kontrollnachricht (DS_Config) der Mobilfunkstation (UE) mitgeteilt wird, wie der Schlaf-/Wachzyklus der Relaisfunkstation (RN) während des Energiesparmodus bzgl. der Aussendung von Synchronisationsinformationen zu der Mobilfunkstation (UE) ist, wobei die Kommunikationsmittel ausgebildet sind von der Mobilfunkstation (UE) eine Bestätigungsnachricht zu empfangen, in der der Empfang und die Akzeptanz des in der ersten, zweiten oder dritten Kontrollnachricht mitgeteilten Schlaf-/Wachzyklus bestätigt wird, **dadurch gekennzeichnet, dass** die Relaisfunkstation (RN) in einem Kraftfahrzeug (30) eingebaut ist, und dass die Kommunikationsmittel ausgelegt sind, von der Mobilfunkstation (UE) statt der Bestätigungsnachricht eine negative Bestätigungsnachricht zu empfangen, mit der der Relaisfunkstation (RN) die Nichtakzeptanz des in der ersten, zweiten oder dritten Kontrollnachricht mitgeteilten Schlaf-/Wachzyklus mitgeteilt wird und wobei in der negativen Bestätigungsnachricht ein Gegenvorschlag zur Vereinbarung eines modifizierten Schlaf-/Wachzyklus enthalten ist.

6. Mobilfunkstation zur Verwendung bei dem Verfahren nach einem der Ansprüche 1 bis 4, wobei die Mobilfunkstation (UE) einen Energiesparmodus aufweist, in dem sie zeitweilig in einen Schlafzustand versetzt wird und bei dem die Schlaf-/Wachzustände der Mobilfunkstation (UE) mit einer Relaisfunkstation (RN) synchronisiert werden, wobei die Mobilfunkstation (UE) Kommunikationsmittel aufweist, die ausgebildet sind nach Empfang einer ersten, zweiten oder dritten Kontrollnachricht, wobei in der ersten Kontrollnachricht der Mobilfunkstation (UE) von der Relaisfunkstation (RN) mitgeteilt wird, wie der Schlaf-/Wachzyklus der Relaisfunkstation (RN) während des Energiesparmodus bezüglich der Downlink-Übertragungsrichtung ist, wobei in der zweiten Kontrollnachricht der Mobilfunkstation (UE) mitgeteilt wird, wie der Schlaf-/Wachzyklus der Relaisfunkstation (RN) während des Energiesparmodus bezüglich der Uplink-Übertragungsrichtung aus Sicht der Mobilfunkstation (UE) ist und wobei in der dritten Kontrollnachricht (DS_Config) der Mobilfunkstation (UE) mitgeteilt wird, wie der Schlaf-/Wachzyklus der Relaisfunkstation (RN) während des Energiesparmodus bzgl. der Aussendung von Synchronisationsinformationen zu der Mobilfunkstation (UE) ist, vor Einleitung des Energiesparmodus eine Bestätigungsnachricht zu der Relaisfunkstation (RN) zurückzusenden, in der der Empfang und die Akzeptanz des in der ersten, zweiten oder dritten Kontrollnachricht mitgeteilten Schlaf-/Wachzyklus bestätigt wird, **dadurch gekennzeichnet, dass** die Kommunikationsmittel ausgebildet sind statt der Bestätigungsnachricht eine negative Bestätigungsnachricht zu der Relaisfunkstation (RN) zurückzusenden, mit der der Relaisfunkstation (RN) die Nichtakzeptanz des in der ersten, zweiten oder dritten Kontrollnachricht mitgeteilten Schlaf-/Wachzyklus mitgeteilt wird, wobei die Kommunikationsmittel ausgebildet sind in der negativen Bestätigungsnachricht einen Gegenvorschlag zur Vereinbarung eines modifizierten Schlaf-/Wachzyklus zu der Relaisfunkstation zu senden.

7. Mobilfunkstation nach Anspruch 6, wobei die Kommunikationsmittel ausgebildet sind die Bestätigung zu der ersten und zweiten Kontrollnachricht in einer gemeinsamen Bestätigungsnachricht (DRxA_Ack) zu senden.

## Claims

1. A method for operating a mobile radio station (UE), wherein the communication between base station (20) and mobile radio station (UE) is conducted via a relay radio station (RN), wherein the mobile radio station (UE) is operated in an energy-saving mode, in which it is temporarily placed in a sleep state, wherein the relay radio station (RN) is also operated in an energy saving mode, in which it is temporarily placed in a sleep state, wherein the sleep-/wake states of the mobile radio station (UE) and the relay radio station (RN) are synchronized, wherein a first, second or third control message is sent to the mobile radio station (UE) from the relay radio station (RN), wherein in the first control message it is communicated to the mobile radio station (UE), how the sleep-/wake cycle of the relay radio station (RN) is in relation to the downlink-transmission direction from the point of view of the mobile radio station (UE), wherein in the second control message it is communicated to the mobile radio station (UE), how the sleep-/wake cycle of the relay radio station (RN) is in relation to the uplink-transmission direction from the point of view of the mobile radio station (UE) and wherein in the third control message (DS_Config) it is communicated to the mobile radio station (UE), how the sleep-/wake cycle of the relay radio station (RN) is in relation to the transmission of synchronization information to the mobile radio station (UE), wherein the mobile radio station (UE) sends back a confirmation message to the relay radio station (RN), in which the receipt and acceptance of the sleep-/wake cycle communicated in the first, second or third control message is confirmed, **characterized in that** instead of the confirmation message a negative confirmation message is sent back to the relay radio station (RN), with which the non-acceptance of the sleep-/wake cycle communicated in the first, second or third control message is communicated to the relay radio station (RN), wherein a counter-proposal for agreement on a modified sleep-/wake cycle is contained in the negative confirmation message, and wherein the relay radio station (RN) is operated in a motor vehicle (30).

2. The method according to Claim 1, wherein the second control message is combined with the first control message and is sent in a common control message (DRxA_Config).

3. The method according to Claim 1 or 2, wherein the confirmation of the first and second control message is sent in a common confirmation message (DRxA_Ack).

4. The method according to any one of the preceding claims, wherein the mobile radio communication system according to the LTE standard (Long Term Evolution) is used for transmission of the data.

5. A relay radio station for use in the method according to any one of the preceding claims, wherein the relay radio station (RN) has an energy-saving mode, in which it is temporarily placed in a sleep state and in which the sleep-/wake states of the relay radio station (RN) are synchronized with a mobile radio station (UE), wherein the relay radio station (RN) has communication means, which are designed to send a first, second or third control message to the mobile radio station (UE) prior to initiation of the energy-saving mode, wherein in the first control message it is communicated to the mobile radio station (UE), how the sleep-wake cycle of the relay radio station (RN) is during the energy-saving mode in relation to the downlink-transmission direction from the point of view of the mobile radio station (UE), wherein in the second control message it is communicated to the mobile radio station (UE), how the sleep-/wake cycle of the relay radio station (RN) is during the energy saving mode in relation to the uplink-transmission direction from the point of view of the mobile radio station (UE) and wherein in the third control message (DS_Config) it is communicated to the mobile radio station (UE), how the sleep-/wake cycle of the relay radio statin (RN) is during the energy saving mode in relation to the transmission of synchronization information to the mobile radio station (UE), wherein the communication means are designed to receive a confirmation message from the mobile radio station (UE), in which the receipt and the acceptance of the sleep-/wake cycle communicated in the first, second or third control message is confirmed, **characterized in that** the relay radio station (RN) is installed in a motor vehicle (30), and that the communication means are designed to receive a negative confirmation message instead of the confirmation message from the mobile radio station (UE), with which the non-acceptance of the sleep-/wake cycle communicated in the first, second or third control message is communicated to the relay radio station (RN) and wherein a counter-proposal for agreement on a modified sleep-/wake cycle is contained in the negative confirmation message.

6. A mobile radio station for use in the method according to any one of Claims 1 to 4, wherein the mobile radio station (UE) has an energy-saving mode, in which it is temporarily placed in a sleep state and in which the sleep-/wake states of the mobile radio station (UE) are synchronized with a relay radio station (RN), wherein the mobile radio station (UE) has communication means, which are designed after receipt of a first, second or third control message, wherein in the first control message it is communicated to the mobile radio station (UE) from the relay radio station (RN), how the sleep-/wake cycle of the relay radio station (RN) is during the energy-saving mode in relation to the downlink-transmission direction, wherein in the second control message it is communicated to the mobile radio station (UE), how the sleep-/wake cycle of the relay radio station (RN) is during the energy-saving mode in relation to the uplink-transmission direction from the point of view of the mobile radio station (UE) and wherein in the third control message (DS_Config) it is communicated to the mobile radio station (UE), how the sleep-/wake cycle of the relay radio station (RN) is during the energy-saving mode in relation to the transmission of synchronization information to the mobile radio station (UE), to send back a confirmation message to the relay radio station (RN) prior to initiation the energy-saving mode, in which the receipt and the acceptance of the sleep-wake cycle communicated in the first, second or third control message is confirmed, **characterized in that** the communication means are designed to send back a negative confirmation message instead of the confirmation message to the relay radio station (RN), with which the non-acceptance of the sleep-/wake cycle communicated in the first, second or third control message is communicated to the relay radio station (RN), wherein the communication means are designed to send a counter-proposal for agreement on a modified sleep-/wake cycle in the negative confirmation message to the relay radio station.

7. The mobile radio station according to Claim 6, wherein the communication means are designed to send the confirmation of the first and second control message in a common confirmation message (DRxA_Ack).

## Revendications

1. Procédé pour l'exploitation d'une station de téléphonie sans fil (UE), la communication entre la station de base (20) et la station de téléphonie mobile (UE) étant effectuée par l'intermédiaire d'une station de téléphonie relais (RN), la station de téléphonie mobile (UE) fonctionnant dans un mode d'économie d'énergie grâce au fait qu'elle est mise temporairement dans un état de sommeil, la station de téléphonie relais (RN) fonctionnant également dans un mode d'économie d'énergie, grâce au fait qu'elle est mise temporairement dans un état de sommeil, les états de sommeil/veille de la station de téléphonie mobile (UE) et de la station de téléphonie relais (RN) étant synchronisés, moyennant quoi, un premier, deuxième ou troisième message de contrôle est envoyé à la station de téléphonie mobile (UE), moyennant quoi, dans le premier message de contrôle, il est notifié à la station de téléphonie mobile (UE) comment est le cycle de sommeil/veille de la station de téléphonie relais (RN) en ce qui concerne le sens de transmission de liaison descendante du point de vue de la station de téléphonie mobile (UE), moyennant quoi, dans le deuxième message de contrôle, il est notifié à la station de téléphonie mobile (UE) comment est le cycle de sommeil/veille de la station de téléphonie relais (RN) en ce qui concerne le sens de transmission de liaison montante du point de vue de la station de téléphonie mobile (UE) et, moyennant quoi, dans le troisième message de contrôle (DS_Config), il est notifié à la station de téléphonie mobile (UE) comment est le cycle de sommeil/veille de la station de téléphonie relais (RN) en ce qui concerne l'envoi d'informations de synchronisation à la station de téléphonie mobile (UE), la station de téléphonie mobile (UE) envoyant en retour à la station de téléphonie relais (RN), un message de confirmation dans lequel la réception et l'acceptation du cycle de sommeil/veille notifié dans le premier, deuxième ou troisième message de contrôle sont confirmées, **caractérisé en ce que**, au lieu du message de confirmation, un message de confirmation négatif est envoyé en retour à la station de téléphonie relais (RN), avec lequel la non-acceptation du cycle de sommeil/veille notifié dans le premier, deuxième ou troisième message de contrôle est notifiée à la station de téléphonie relais (RN), moyennant quoi, dans le message de confirmation négatif, une contre-proposition est contenue pour convenir d'un cycle de sommeil/veille modifié et la station de téléphonie relais (RN) étant utilisée dans un véhicule automobile (30).

2. Procédé selon la revendication 1, le deuxième message de contrôle étant combiné avec le premier message de contrôle et envoyé dans un message de contrôle commun (DRxA_Config).

3. Procédé selon la revendication 1 ou 2, la confirmation concernant les premier et deuxième messages de contrôle étant envoyée dans un message de confirmation commun (DRxA_Ack).

4. Procédé selon l'une des revendications précédentes, moyennant quoi, pour la transmission des données, le système de communication par téléphonie mobile est exploité selon le standard LTE (Long Term Evolution).

5. Station de téléphonie relais destinée à être utilisée dans le procédé selon l'une des revendications précédentes, la station de téléphonie relais (RN) comprenant un mode d'économie d'énergie dans lequel elle est mise dans un état de sommeil et dans lequel les états de sommeil/veille de la station de téléphonie relais (RN) sont synchronisés avec une station de téléphonie mobile (UE), la station de téléphonie relais (RN) comprenant des moyens de communication qui sont conçus pour envoyer, avant le passage en mode d'économie d'énergie, un premier, deuxième ou troisième message de contrôle à la station de téléphonie mobile (UE), moyennant quoi, dans le premier message de contrôle, il est notifié à la station de téléphonie mobile (UE) comment est le cycle de sommeil/veille de la station de téléphonie relais (RN), pendant le mode d'économie d'énergie, en ce qui concerne le sens de transmission de liaison descendante du point de vue de la station de téléphonie mobile (UE), moyennant quoi, dans le deuxième message de contrôle, il est notifié à la station de téléphonie mobile (UE) comment est le cycle de sommeil/veille de la station de téléphonie relais (RN), pendant le mode d'économie d'énergie, en ce qui concerne le sens de transmission de liaison montante du point de vue de la station de téléphonie mobile (UE) et, moyennant quoi, dans le troisième message de contrôle (DS_Config), il est notifié à la station de téléphonie mobile (UE) comment est le cycle de sommeil/veille de la station de téléphonie relais (RN), pendant le mode d'économie d'énergie, en ce qui concerne l'envoi d'informations de synchronisation à la station de téléphonie mobile (UE), les moyens de communication étant conçus pour recevoir, en provenance de la station de téléphonie mobile (UE), un message de confirmation dans lequel la réception et l'acceptation du cycle de sommeil/veille notifié dans le premier, deuxième ou troisième message de contrôle sont confirmées, **caractérisé en ce que** la station de téléphonie relais (RN) est intégrée dans un véhicule automobile (30) et **en ce que** les moyens de communication sont conçus pour recevoir, en provenance de la station de téléphonie mobile (UE), au lieu du message de confirmation, un message de confirmation négatif avec lequel la non-acceptation du cycle de sommeil/veille notifié dans le premier, deuxième ou troisième message de contrôle est notifiée à la station de téléphonie relais (RN), moyennant quoi, dans le message de confirmation négatif, une contre-proposition est contenue pour convenir d'un cycle de sommeil/veille modifié.

6. Station de téléphonie mobile destinée à être utilisée dans le procédé selon l'une des revendications 1 à 4, la station de téléphonie mobile (UE) comprenant un mode d'économie d'énergie dans lequel elle est temporairement mise dans un état de sommeil et dans lequel les états de sommeil/veille de la station de téléphonie mobile (UE) sont synchronisés avec une station de téléphonie relais (RN), la station de téléphonie mobile (UE) comprenant des moyens de communication qui sont conçus pour envoyer en retour, à la station de téléphonie relais (RN), après la réception d'un premier, deuxième ou troisième message de contrôle, moyennant quoi, dans le premier message de contrôle, il est notifié à la station de téléphonie mobile (UE), par la station de téléphonie relais (RN), comment est le cycle de sommeil/veille de la station de téléphonie relais (RN), pendant le mode d'économie d'énergie, en ce qui concerne le sens de transmission de liaison descendante du point de vue de la station de téléphonie mobile (UE), moyennant quoi, dans le deuxième message de contrôle, il est notifié à la station de téléphonie mobile (UE) comment est le cycle de sommeil/veille de la station de téléphonie relais (RN), pendant le mode d'économie d'énergie, en ce qui concerne le sens de transmission de liaison montante du point de vue de la station de téléphonie mobile (UE) et, moyennant quoi, dans le troisième message de contrôle (DS_Config), il est notifié à la station de téléphonie mobile (UE) comment est le cycle de sommeil/veille de la station de téléphonie relais (RN), pendant le mode d'économie d'énergie, en ce qui concerne l'envoi d'informations de synchronisation à la station de téléphonie mobile (UE), avant le passage au mode d'économie d'énergie, un message de confirmation dans lequel la réception et l'acceptation du cycle de sommeil/veille notifié dans le premier, deuxième ou troisième message de contrôle sont confirmées, **caractérisé en ce que** les moyens de communication sont conçus pour envoyer en retour, à la station de téléphonie relais (RN), un message de confirmation négatif avec lequel la non-acceptation du cycle de sommeil/veille notifiée dans le premier, deuxième ou troisième message de contrôle est notifiée à la station de téléphonie relais (RN), les moyens de communication étant conçus pour envoyer, à la station de téléphonie relais, dans le message de confirmation négatif, une contre-proposition pour convenir d'un cycle de sommeil/veille modifié.

7. Station de téléphonie mobile selon la revendication 6, les moyens de communication étant conçus pour envoyer la confirmation concernant les premier et deuxième messages de contrôle dans un message de confirmation commun (DRxA_Ack).
